# FASCICULE DE BREVET EUROPEEN

(11) **EP 2 759 202 B1**
(45) Date de publication et mention de la délivrance du brevet: **21.08.2019**
(21) Numéro de dépôt: 14150994.3
(22) Date de dépôt: 13.01.2014
(51) Int. Cl.: A21D 6/00, A21D 8/02, A21D 2/04, A23B 9/18

(54) **Utilisation de la farine résultant d'un traitement des grains à l'ozone pour la préparation de produits panifiés à sel réduit**
Verwendung von Mehl aus ozonbehandelten Getreidekörnern zur Herstellung von Brotbackwaren mit geringem Salzgehalt
Use of flour resulting from the ozone treatment of grains for the preparation of low-salt bread products

(30) Priorité: 25.01.2013 FR 1350652
(43) Date de publication de la demande: 30.07.2014
(73) Titulaire: Green Technologies Sarl, 35400 Saint Malo (FR)
(72) Inventeur: Bertaud, Simon, 92100 Boulogne (FR); Sicart, Gilles, 47310 Moirax (FR)
(74) Mandataire: Cabinet Le Guen Maillet

(56) Documents cités:
- EP-A1- 0 948 904
- EP-A2- 2 340 715
- WO-A1-01/43556
- FR-A- 816 729
- FR-A1- 2 946 985
- US-A1- 2003 104 103
- EL-DESOUKY T A ET AL: "Effect of ozonation of wheat grain on quality bread factory", JOURNAL OF AGROALIMENTARY PROCESSES AND TECHNOLOGIES : JAP&T / BANAT UNIVERSITY OF AGRICULTURAL SCIENCES AND VETERINARY MEDICINE, TIMISOARA : BANAT UNIVERSITY, 2006-, RO, vol. 19, no. 1, 15 janvier 2013 (2013-01-15), pages 1-9, XP008165079, ISSN: 2069-0053
- VIOLLEAU, PERNOT, SUREL: "Effect of Oxygreen wheat ozonation process on bread dough quality and protein solubility", JOURNAL OF CEREAL SCIENCE, vol. 55, 28 janvier 2012 (2012-01-28), XP002713885,
- DATABASE WPI Week 1984 Thomson Scientific, London, GB; AN 1984-104758 XP002165162, & JP 59 048040 A (HOUSE SHOKUHIN KOGYO KK) 13 septembre 1982 (1982-09-13)
- SANDHU, MANTHEY, SIMSEK: "Quality of bread made from ozonated wheat flour", JOURNAL SCIENCE FOOD AGRICULUTRE, vol. 91, 28 mars 2011 (2011-03-28), pages 1576-1584, XP002713886,
- "alto - Source de fibres", Les nouvelles de la Boulangerie Pâtisserie-Supplément technique-inpb , no. 95 15 January 2011 (2011-01-15), Retrieved from the Internet: URL:http://www.cannelle.com/BILIOTHEQUE/re vuetec/PDF/SUPSTn95.pdf [retrieved on 2017-02-23]
- Gérard BROCHOIRE: "Le pain et le sel: un enjeu de santé public?", NAFAS, vol. 1, no. 1 March 2003 (2003-03), Retrieved from the Internet: URL:http://www.cannelle.com/LABO/produits/ sel/pdf/painetsel_enjeupublique.pdf [retrieved on 2017-02-23]

## Description

### Domaine de l'invention

La présente invention se rapporte à une composition pour pétrissage contenant de la farine obtenue par broyage de grains traités avec de l'ozone préalablement audit broyage, de l'eau et une quantité limitée de sel ainsi qu'à des produits de panification obtenus par l'utilisation d'une telle composition.

### Arrière-plan technologique

Il est bien connu que l'excès d'ingestion de sel dans les populations humaines est corrélé avec une mortalité accrue. Le lien entre une consommation importante de sel et les risques d'accidents vasculaires cérébraux (AVC) ou de complications cardio-vasculaires telles que des infarctus est bien connu. D'autres effets délétères du chlorure de sodium compris dans l'alimentation humaine sont l'ostéoporose, la lithiase urinaire, les insuffisances rénales et cardiaques, ainsi que l'obésité infantile, le syndrome métabolique et des cancers digestifs. En réalité, les besoins physiologiques en sodium (Na) et en chlorure (Cl) sont entièrement assurés par une alimentation équilibrée sans sel ajouté. L'appétence pour le chlorure de sodium (NaCl) est totalement acquise et de ce point de vue peut légitimement être considérée comme une dépendance toxique très répandue dans la population humaine moderne.

Il est intéressant de déterminer l'importance relative des différents aliments vecteurs de sel dans la population. Il a été ainsi déterminé qu'environ 25 % de l'apport journalier de sel dans la population adulte française est apporté par le pain et les produits secs de panification. Compte-tenu du sel apporté par d'autres produits de panification (entre autres, viennoiseries, pâtisseries, gâteaux, pizzas et tartes salées), on constate que de l'ordre d'un tiers du sel ingéré quotidiennement est apporté par des produits de panification.

Les enquêtes révèlent que la grande majorité de la population dépasse les quantités maximales préconisées par des spécialistes dans le domaine médical. On préconise notamment chez l'adulte au maximum 2300 mg par jour de sodium (Na) pour un homme sain, ce qui correspond à 6 g (une cuillère à café) de chlorure de sodium (NaCI). Des enquêtes révèlent cependant que probablement le chiffre de 6 g par jour est dépassé par 95 % de la population masculine et 82 % de la population féminine. Une consommation moyenne de 8 g par jour semble être dépassée par 67 % de la population masculine et 36 % de la population féminine. Compte-tenu des problèmes physiologiques notamment mais pas seulement cardio-vasculaires, dont la corrélation avec la surconsommation de sel a été clairement établie, cette question est d'une importance primordiale pour la santé publique. En complément des campagnes d'information incitant la population à s'habituer à des aliments moins salés, de nombreux travaux de recherche ont été consacrés à des produits de substitution possibles.

Le minéral de substitution classique est le chlorure de potassium, qui présente l'avantage d'être peu cher. Cependant, ce produit a un arrière-goût métallique ou amer et nécessite des masquants tels que la lysine, divers arômes ou extraits de levure. Le KCI apporte bien entendu des ions chlorures qui sont nutritionnellement nocifs. Des minéraux de substitution basés sur le magnésium (Mg) et le calcium (Ca) ont été développés, ainsi que divers sels organiques et minéraux (carbonates, lactates, phosphates, citrates, sulfates) de Na, K, Mg ou Ca.

Vu l'importance numérique des produits de panification dans l'apport journalier en sel, la réduction du sel dans les produits panifiés, sans effet négatif sur l'appréciation par le consommateur, présente une importance évidente. Cependant le rôle du sel dans la panification n'est pas seulement gustatif. Il est également important de signaler que les conditions modernes et industrielles de production de produits panifiés conduisent aussi à favoriser un accroissement de la quantité de sel ajoutée.

Au niveau des besoins industriels, on peut observer que l'arrivée des méthodes de pétrissage mécaniques intenses, donnant lieu à une oxydation plus importante avec une diminution de richesse aromatique par oxydation ainsi qu'une diminution des temps de fermentation, peut conduire à des doses plus élevées de sel en compensation. L'utilisation de quantités de sel élevées (au-delà de 2 % en poids par rapport à la farine) permet également une meilleure aptitude de la pâte à la rétention gazeuse. Il est également connu qu'une augmentation de la quantité de sel permet de réduire les activités enzymatiques et particulier celle de la lipoxygénase. Cette enzyme étant capable de favoriser l'oxydation des pigments caroténoïdes de la farine, peut donner lieu à un blanchiment de la mie, ce qui sera inhibé par l'ajout de sel. Le sel retarde également le développement des bactéries de la putréfaction et en limitant le dessèchement du pain retarde son rassissement. Enfin, on peut noter que l'ajout de sel diminue le point de cristallisation des pâtes à pain lors de leur congélation ce qui facilite le stockage des pâtes au froid par le boulanger. Ainsi, pour toute une série de raisons non seulement liées au goût mais également à la texture, à la force des pâtes ainsi que la consommation des produits panifiés, au fil du temps, la quantité moyenne de sel ajoutée à la farine dans la fabrication du pain a augmenté pour atteindre actuellement de 2,1 à 2,3 % en France.

Dans le domaine précis de substituts de NaCl dans le domaine de la panification, on peut citer le brevet US 6 013 298 qui décrit l'utilisation des gluconates de sodium ou de potassium dans la préparation de produits panifiés. Selon ce brevet, par l'évaluation au goût, il a été possible de remplacer tout ou partie du NaCl habituellement utilisé dans la préparation du produit par un gluconate de sodium ou de potassium. Une étude analogue utilisant, à la place des gluconates, le sel de sodium de l'acide malique ou le lactate de sodium, est décrit dans la demande de brevet JP-09-238643. On peut également citer le brevet US 6 495 185 qui enseigne l'utilisation d'un mélange de flavonoïdes obtenus à partir de l'oignon, de la pomme et du thé comme substitut du sel entre autres dans la préparation du pain.

Au vu du problème majeur de santé publique que constitue la sur-ingestion de NaCl et au vu du rôle central joué par le pain et les produits de panification dans cette sur-ingestion généralisée de chlorure de sodium, il est d'un intérêt évident de pouvoir proposer des moyens de réduire la quantité de sel utilisée dans les produits de panification à des coûts raisonnables et tout en fournissant une solution technologique applicable à grande échelle.

### Résumé de l'invention

Dans la demande de brevet antérieure de la demanderesse, WO 01/43556, il est décrit un procédé de fabrication de la farine comprenant le broyage des grains de blé préalablement nettoyés et humidifiés caractérisé en ce que, préalablement ou simultanément audit broyage, on met lesdits grains en contact avec de l'ozone produit à partir d'un gaz vecteur, de préférence en une quantité comprise entre 0,5 et 20 exprimée en gramme d'ozone par kilo de grains. La durée de traitement des grains est de préférence comprise entre 5 et 70 min, plus préférentiellement entre 15 et 40 minutes. Selon un mode de réalisation préférentiel de l'invention décrite par la demanderesse dans la demande WO 01/43556, l'eau servant à l'humidification des grains est elle-même préalablement traitée par de l'ozone. Dans un procédé alternatif, dans la demande de brevet WO 2004/028695, la demanderesse a décrit un procédé analogue de traitement de matières végétales non-broyées telles que des grains de blé, se distinguant du procédé décrit dans WO1/43556 par une phase de repos de la matière végétale pendant au moins 1 jour après une préhumidification suivie d'une ozonation faisant appel à une humidification complémentaire apportant de 3 à 10% en poids d'eau par rapport au poids sec de la matière végétale. Les farines obtenues par ce procédé modifié sont qualifiées de farines « technologiques », car elles présentent des capacités de gonflement lors de la fermentation et un profil de modification de la viscosité des solutions de farines particulièrement intéressant. Comme il est expliqué dans les demandes antérieures de la demanderesse WO 01/43556 et WO 2004/028695, l'ozonation des grains avant mouture a des effets notables sur les propriétés mécaniques d'une pâte lors de la fermentation et l'évolution de la viscosité d'une solution contenant de la farine, et l'utilisation de l'ozone a des effets qui peuvent être détectés directement par analyse chimique des grains, notamment le taux de maltose et l'apparition du MDA (malondialdéhyde).

Par conséquent, la farine résultant du broyage de grains, tels que les grains de blés, traités avec de l'ozone, peut être distinguée physiquement et chimiquement d'une farine classique obtenue par broyage des grains n'ayant pas subi un tel traitement.

Le document « Effect of Oxygreen® wheat ozonation process on bread dough quality and protein solubility », Journal of Cereal Science 55(2012) 392-396 présente l'effet d'un traitement à l'ozone de grains de blé sur les propriétés de panification.

Le document « Quality of bread made from ozonated wheat (Triticum aestivum /.) flour », H. PS Sandu et al., Novembre 2010, décrit des pains cuits à partir d'une pâte comprenant de la farine traitée à l'ozone.

La demande FR 816 729 décrit la désinfection des céréales destinées à la panification par traitement à l'ozone.

Lors de recherches menées par la demanderesse sur la panification impliquant des farines obtenues par des méthodes décrites en elles-mêmes précédemment dans les demandes antérieures WO 01/43556 et WO 2004/028695 et les documents cités précédemment, il a été constaté de manière surprenante, et ceci constitue le fondement de la présente invention, que lors de la préparation de produits panifiés utilisant une telle farine, une réduction dans la quantité de sel ajouté ne déclenchait pas une réaction négative de la part des consommateurs. De plus, il a été constaté que les propriétés boulangères observées avec une telle farine atteignaient leurs valeurs maximales avec une quantité de sel rajoutée de l'ordre de 1,4 % en masse par rapport à la masse de la farine. A cette concentration en sel, largement inférieure à celle généralement pratiquée en boulangerie actuellement, des propriétés boulangères tout à fait acceptables sont obtenues, comparables à celles obtenues avec des farines conventionnelles (obtenues par broyage de grains de blés non traités à l'ozone), même plus riches en protéines et en présence de quantités plus élevées de sel. Dans le cadre de la présente invention, la farine utilisée pour panification est obtenue par broyage de grains traités avec de l'ozone préalablement audit broyage, et de préférence obtenue par des méthodes décrites dans les demandes antérieures WO 01/43556 et WO 2004/028695, de manière plus préférentielle en travaillant dans des conditions de durée de procédé et/ou de quantité d'ozone ajouté et/ou par utilisation conjointe d'ozone gazeux et d'eau ozonée conformément aux préférences exprimées dans ces demandes de brevet antérieures et qui ont été rappelées plus haut.

La présente invention concerne donc une composition pour pétrissage comprenant :
- de la farine obtenue par broyage de grains traités avec de l'ozone préalablement audit broyage ;
- du sel de mer (NaCl) en une quantité comprise entre au moins 1,4% et au plus 1,6% en poids relatif au poids de la farine ;
- de l'eau.

Dans un mode de réalisation généralement préférable, une composition pour pétrissage selon l'invention comprend de la levure ou du levain.

Dans un mode de réalisation de la présente invention généralement préférable, les grains dont la farine est issue sont des grains de blé tendre, de seigle, de blé dur, de blé et/ou de seigle maltés, de maïs, ou de leurs mélanges.

Dans un autre aspect, la présente invention se rapporte à un produit panifié obtenu par fermentation et/ou cuisson d'une composition pour pétrissage selon l'invention.

Dans un autre aspect, la présente invention se rapporte à l'utilisation d'une composition pour pétrissage telle que décrite précédemment dans un procédé de fermentation et/ou de cuisson afin d'obtenir un produit panifié.

Un tel procédé de préparation (ne faisant pas partie de l'invention) comprend les étapes suivantes :
(a) un processus de fabrication de la farine comprenant le broyage des grains de blé préalablement nettoyés et humidifiés dans lequel, préalablement audit broyage, on met lesdits grains en contact avec de l'ozone produit à partir d'un gaz vecteur, de préférence en une quantité comprise entre 0,5 et 20 exprimée en gramme d'ozone par kilo de grains ;
(b) la préparation d'une composition pour pétrissage comprenant de la farine obtenue à l'étape (a), du sel de mer (NaCl) en une quantité inférieure ou égale à 1,8 % en poids relatif au poids de la farine, et de l'eau ; et
(c) la fermentation et/ou la cuisson d'une composition pour pétrissage obtenue à l'étape (b).

De préférence, la quantité d'ozone, exprimée en gramme d'ozone par kilo de grains (de blé) à traiter, est comprise entre au moins 3 et au plus 12 (g O₃ par kg de grains), de préférence au moins 5 et au plus 9 (g O₃ par kg de grains).

Dans un tel procédé, la durée préférée de traitement des grains à l'ozone est comprise entre 5 et 70 min, plus préférentiellement entre 15 et 40 minutes.

Dans un tel procédé, l'eau servant à l'humidification des grains est de préférence elle-même préalablement traitée par de l'ozone.

Dans la présente invention, on entend par « farine » un produit obtenu par broyage fin de grains de variétés de céréales, et notamment de blé tendre. La taille moyenne des particules d'une « farine » est habituellement comprise entre 50 et 60 µm, la taille minimale étant le plus souvent d'environ 6 µm et la taille maximale d'environ 220 µm. Lorsqu'un poids d'un composant est indiqué relatif au poids de farine dans la présente invention, sans autre qualification, le poids de farine en question est le poids de la farine telle qu'elle est obtenue par broyage des grains à l'état naturel (qui contiennent d'eau) ou telle qu'elle est commercialisée après broyage. Des farines obtenues par broyage et commercialisées contiennent habituellement environ 14 à 15% de poids d'eau. Lorsque le mot « sel » est utilisé dans la présente invention, sans autre qualification, ce terme recouvre le « sel alimentaire », « sel de table » ou « sel de cuisine » habituellement autorisé à la vente, de tels produits comprenant en général au moins 94 % en poids de NaCl. En pratique, des sels d'origine marine peuvent contenir naturellement du potassium, du carbonate de calcium, du sulfate de magnésium, et éventuellement d'autres ions métalliques. Des sels industriels à usage alimentaire peuvent, de façon autorisée par la législation, contenir des antiagglomérants comprenant du calcium, du magnésium et du silicium (sous forme de phosphate, de carbonate ou d'oxyde) et l'utilisation dans ce contexte de l'additif E535 (ferrocyanure de sodium) est autorisé. Ces additifs sont en général présents dans des quantités bien inférieures à 1 g pour 100 g de « sel », voire inférieures à 100 mg pour 100 g de « sel ».

Un procédé de fabrication de pain comprend habituellement les étapes suivantes :
- mélange des matières premières (pétrissage pour former une pâte) ;
- fermentation (la température lors de la fermentation est souvent légèrement supérieure à la température ambiante, par exemple 30°C) ;
- (de façon facultative) la division de la pâte en parties distinctes, passant par une phase de repos éventuelle et l'incorporation des parties distinctes dans des moules ;
- cuisson, souvent à une température de l'ordre de 200°C ou supérieure.

Au cours de la première phase de l'opération de préparation du pain, celle du pétrissage, les constituants de base (le plus souvent eau, farine, levure ou levain, sel de mer et autres additifs éventuels) sont intimement mélangés en présence d'une atmosphère oxydante (l'air environnant). L'introduction de l'air s'effectue par l'application à la pâte de contraintes mécaniques multiples de type mélange, agitation, brassage, cisaillement. Bien entendu, il existe toute une palette de méthodes entre le malaxage manuel traditionnel par le boulanger jusqu'au procédé semi-automatique en boulangerie voire réalisé à grande échelle dans un contexte industriel. Comme il a été dit plus haut, de par l'utilisation de farines obtenues à partir de grains traités à l'ozone, il est possible de réduire la quantité de sel habituellement utilisée sans compromettre le résultat de la panification, et ceci dans des conditions habituelles en boulangerie artisanale ou industrielle.

Les compositions pour pétrissage selon la présente invention contiendront de façon appropriée de la levure ou du levain.

Pour la levure, il est d'usage dans le domaine de la panification d'exprimer la dose de levure en quantité de levure pressée par kg de farine. Les valeurs généralement appropriées dans la présente invention seront comprises entre 0,5 et 3 %, en quantité de levure pressée par kg de farine, pour les divers produits de panification courants. La valeur maximale peut être plus élevée, par exemple 4 % pour le pain de mie et 5 % pour la brioche et les produits de panification crus surgelés.

On peut noter qu'il existe différentes formulations de levure autres que la levure pressée, et notamment la levure sèche et la crème de levures. Il existe des facteurs de conversion entre ces différentes formulations tenant compte de la teneur en matière sèche et de la proportion de levures actives. Une préparation commerciale de levure pressée contient de l'ordre de 10¹⁰ levures/g. La gamme de 0,5 à 5 % de levure pressée sur base de farine brute (masse/masse), généralement appropriée dans le cadre de la présente invention, correspond donc à un nombre de levures compris entre 50. 10⁹ et 500.10⁹ levures/kg de farine.

Pour les levains, il existe deux modes principaux d'ensemencement de pâtes :
- soit un levain « chef » résultant de pré-fermentation spontanée sans incorporation de micro-organismes sélectionnés. Un levain chef contient de l'ordre de 10⁹ bactéries lactiques / g de levain chef et de l'ordre de 10⁷ levures/ g de levain chef ;
- soit un levain issu de cultures de micro-organismes sélectionnés disponibles commercialement (appelées « starters »). Ces « starters » peuvent être bactériens et contenir au minimum 10⁹ bactéries lactiques / g de « starter », ou être mixtes, contenant au minimum 10⁹ bactéries lactiques / g et 10⁷ levures/ g de « starter ».

De façon généralement appropriée, en moyenne, on pourra utiliser de l'ordre de 200 g de levain/kg de farine, et jusqu'à 400 g/kg de farine.

Concernant la quantité d'eau par rapport à la farine, exprimée en masse d'eau ajoutée par rapport à la masse de farine, calculée par rapport à la masse de farine telle que reçue (qui contient environ 14 % ou 15 % d'eau), on utilisera de préférence de 50 à 75 %, plus préférentiellement de 60 à 75 % en masse d'eau par rapport à la masse de farine. Dans la pratique, une valeur aux alentours de 50% correspond aux pâtes feuilletées, et une valeur aux alentours de 56 % aux pâtes crues surgelées.

Selon le type de produit de panification envisagé, il est possible d'incorporer dans la composition pour pétrissage selon l'invention une certaine quantité de sucre(s) et/ou de matière(s) grasse(s) ajoutés. Pour les produits de boulangerie courante (pain de tradition, pain courant français, pain de froment, pains de l'Union européenne) les quantités de matières grasses sont habituellement inférieures à 5 % et/ou les quantités de sucre(s) rajoutées habituellement inférieures à 5 % (valeurs exprimées en masse par rapport à la masse en matière sèche des produits finis). Pour les produits de boulangerie fine, pains spéciaux, biscottes, brioches, les teneurs en matières grasses et/ou en sucres peuvent cependant être supérieures à 5 %.

D'autres additifs peuvent être incorporés dans les compositions pour pétrissage selon la présente invention :
- les enzymes utilisables en panification telles que: alpha amylases, hémicellulases, pentosanases, xylanases, endoglucanases, glucose oxydase, lipases ;
- les agents oxydoréducteurs tels que: acide ascorbique 0-200 ppm, la levure désactivée (source de glutathion) ; les farines de fève (au maximum 2 % en poids sur la base du poids de farine) ou de soja (au maximum 0,5 % % en poids sur la base du poids de farine) (sources de lipoxygénases) ;
- émulsifiants tels que : lécithines (au maximum 0,3 % en poids sur la base du poids de farine) ;
- monoglycérides, mono-diglycérides, et esters acétiques et/ou tartriques correspondants.

Dans le cadre de la présente invention, les grains dont la farine est issue seront de façon appropriée des grains de blé, notamment des grains de blé tendre. Il est également possible d'utiliser des farines obtenues par broyage de grains d'autres espèces végétales, ces grains étant traités à l'ozone. Il s'agit notamment des espèces céréalières suivantes : seigle, blé et seigle maltés, blé dur, maïs. La farine de blé maltée est utilisée comme source d'enzymes, en particulier des amylases.

### Partie expérimentale

### Etude chez des consommateurs : comparaison de l'appréciation en fonction de la quantité de sel

Une étude a été menée impliquant 80 consommateurs réguliers de pain âgés de 18 à 70 ans. L'objet de l'étude a été de connaître l'accueil des consommateurs face à plusieurs baguettes de type « baguette de tradition française » réalisées ou non avec une farine obtenue à partir de grains ozonés et avec des quantités de sel variables.

### Farines utilisées et préparations des baguettes d'essai

La farine témoin était une farine de tradition française label rouge, dont le fournisseur était Gers Farine, contenant de la farine de blé type 65, de l'amylase fongique, et de la farine de blé malté. La catégorie T65 correspond à une classification des farines basée sur la teneur en matières minérales ou taux de cendres : une farine T 65 contient entre 0,62 et 0,75 % de cendres sur la base de la matière sèche de la farine.

La farine de grains ozonés utilisée dans ces essais était une farine de marque Qualista, commercialisée par la société demanderesse, de type T55 (une farine T 55 contient entre 0,5 et 0,6 % de cendres sur la base de la matière sèche farine).

Pour chaque échantillon préparé, la quantité de farine était de 6000 g, la quantité de levure de 30 g, l'eau initiale comprise entre 64 et 68 % par rapport à la farine ajoutée, et l'eau de bassinage comprise entre 2 et 5 % par rapport à la farine. Ainsi, le niveau total d'hydratation (eau ajoutée par rapport à la farine) était de 69 ou 70 %.

En ce qui concerne le sel, pour une baguette contenant 1,8 % de sel, 108 g ont été ajoutés dans une préparation contenant 6000 g de farine. Pour une baguette contenant 1,6 % de sel par rapport à la farine, 96 g ont été ajoutés, et pour une baguette contenant 1,4 % de sel, 84 g de sel ont été ajoutés.

Concernant le procédé de fabrication, les étapes suivantes ont été réalisées :
Frasage : vitesse 1 -> 5 min
Autolyse : 30 min
Levure + sel : 10 minutes en vitesse 1
Température de pâte à 25°C
Pointage en bac pendant 30 min avec rabat
Stockage à +2°C pendant 12 h

Le lendemain, les étapes suivantes ont été réalisées :
Division en pâtons de 340 g
Mise en forme
Détente -> 20 min
Façonnage manuel
Soudure dessus
Fermentation pendant 1 heure à 22°C
Pâtons farinés ; 1 coup de lame
Cuisson avec buée à 250°C pendant 25 min.

En utilisant les méthodes indiquées plus haut, cinq types de baguettes ont été préparés :
1 - Baguette avec farine classique, avec 1,8% en poids de sel par rapport au poids de la farine (exemple comparatif) ;
2 - Baguette avec farine de grains ozonés, avec 1,8% en sel par rapport au poids de la farine (exemple comparatif) ;
3 - Baguette avec farine de grains ozonés, avec 1,6% en sel par rapport au poids de la farine ;
4 - Baguette avec farine de grains ozonés, avec 1,5% en poids de sel par rapport au poids de la farine
5 - Baguette avec farine de grains ozonés, avec 1,4% en poids de sel par rapport au poids de la farine.

### Tests chez des consommateurs

Dans l'étude réalisée chez les consommateurs, ceux-ci ont été priés de remplir des questionnaires dans lesquels ils devaient noter l'appréciation visuelle de la baguette entière, l'appréciation de l'odeur, du goût, de la texture en bouche et de la texture croustillante, l'appréciation globale et l'intention de consommer à nouveau le même type de baguette. La notation demandée aux participants était sur une échelle numérique entre 1 (« je n'aime pas du tout ») et 10 (« j'aime beaucoup »).

Lors des essais, les baguettes ont été découpées en 3 après que les extrémités ont été retirées. La quantité servie par consommateur était de 1/3 de baguette. Les baguettes ont chacune été codées par numéro aléatoire à 3 chiffres. Dans une étude statistique des résultats obtenus, dans un test de Friedman, applicable à la comparaison de plus de 2 produits, les résultats suivant ont été obtenus :

**Tableau 1 :**

| Résultats de tests chez des consommateurs de baguettes préparées avec des quantités de sel variables | | | | | | | |
|---|---|---|---|---|---|---|---|
| ATTRIBUTS | VALEURS | FARINE CLASSIQUE 1,8% EN SEL | FARINE DE GRAINS OZONÉS 1,8% EN SEL | FARINE DE GRAINS OZONÉS 1,6% EN SEL | FARINE DE GRAINS OZONÉS 1,5% EN SEL | FARINE DE GRAINS OZONÉS 1,4% EN SEL | Significativité Du Test Statistique |
| APPRECIATION VISUELLE (ENTIER) | Moyenne | 7.21 | 7.05 | 7.06 | 7.84 | 6.90 | * * * |
| | Ecart type (n) | 1.49 | 1.72 | 1.58 | 1.54 | 1.71 | |
| APPRECIATION GLOBALE | Moyenne | 6.27 | 6.08 | 6.72 | 6.79 | 6.80 | * * |
| | Ecart type (n) | 1.78 | 7.88 | 1.70 | 1.85 | 1.72 | |
| APPRECIATION DE L'ODEUR | Moyenne | 6.59 | 6.53 | 6.63 | 6.66 | 6.69 | NS |
| | Ecart type (n) | 1.62 | 1.70 | 1.73 | 1.78 | 1.67 | |
| APPRECIATION DU GOUT | Moyenne | 6.58 | 3.36 | 6.81 | 6.71 | 6.71 | NS |
| | Ecart type (n) | 1.72 | 1.98 | 1.77 | 1.66 | 1.76 | |
| APPRECIATION DE LA TEXTURE EN BOUCHE | Moyenne | 6.25 | 6.09 | 6.72 | 6.70 | 6.76 | * |
| | Ecart type (n) | 1.89 | 2.01 | 1.88 | 1.67 | 1.77 | |
| APPRECIATION DU CROUSTILLANT | Moyenne | 6.13 | 5.99 | 6.72 | 6.80 | 7.01 | * * * |
| | Ecart type (n) | 2.01 | 2.19 | 1.97 | 1.76 | 2.01 | |

| | | | | | | | |
|---|---|---|---|---|---|---|---|
| * Significativité au seuil de 5% ; ** Significativité au seuil de 1% ; *** Significativité au seuil de 0,1% NS = Non-significativité au seuil minimum de 5% | | | | | | | |

Il a été remarqué par l'analyse de ces données que l'aspect visuel de la baguette entière obtenue à partir de farine de grains ozonés avec 1,5 % en sel a été plus apprécié que l'aspect des autres baguettes. Bien que pour certaines questions posées aux consommateurs, les résultats ne sont pas significatifs dans l'analyse par test de Friedman, il a été déterminé, avec un effet significatif au seuil de 0,1 %, que la texture croustillante de la baguette à base de farine de grains ozonés avec seulement 1,4 % de sel a été plus appréciée que l'une ou l'autre des baguettes avec 1,8 % de sel. La texture croustillante de la baguette obtenue à partir de farine de grains ozonés avec 1,5 % de sel a été plus appréciée que celle obtenue à partir de farine de grains ozonés avec 1,8 % de sel, la baguette obtenue à partir de farine de grains ozonés avec 1,6 % de sel occupant une position intermédiaire.

Concernant les intentions de « re-consommation », celles-ci ont été significativement positives pour la baguette obtenue à partir de farine classique avec 1,8 % de sel avec des avis partagés pour la baguette obtenue à partir de farine de grains ozonés avec 1,8 % de sel. En revanche, les intentions de « re-consommation » ont été significativement positives pour les trois baguettes obtenues avec moins de 1,8 % en poids de sel par rapport au poids de farine pour les farines obtenues à partir de grains ozonés.

Ces essais ont donc montré que la réduction de la quantité de sel dans des baguettes préparées à partir de farines de grains ozonés ne provoquait pas de différence significative dans l'appréciation de l'odeur et du goût par les consommateurs. En revanche, il semblerait que la texture croustillante a été même plus appréciée pour la baguette ayant la plus forte réduction du taux de sel, ce produit ayant été plus plébiscité que l'une ou l'autre des baguettes préparées avec 1,8% de sel par rapport à la farine. Les baguettes préparées à partir de farines de grains ozonés ont laissé une impression aussi favorable en moyenne chez les consommateurs dans la mesure où les intentions de « re-consommation » de ces produits (à sel réduit) étaient équivalentes à celles du produit obtenu à partir de farines classiques avec 1,8 % de sel.

C'est à partir des résultats inattendus observés par la demanderesse lors de cette étude qu'il est apparu que l'utilisation de farines obtenues à partir de grains ozonés peut constituer une nouvelle méthode de choix permettant de proposer aux consommateurs des produits de panification à sel réduit.

### Tests de propriétés boulangères et rhéologie des pâtes

Dans des tests de boulangerie professionnelle, les propriétés de différents types de farine dans des compositions avec des quantités variables de sel ont été déterminées.

### Farines utilisées

Les farines suivantes ont été utilisées pour ces tests :
- Base Paulic Type 55 (une farine des meuniers Minoterie Paulic, Bretagne, France, sans additif, notamment de type protéique). Cette farine 100% à base de blé tendre présent un taux d'humidité de 15,2 % et un taux de protéines de 10,64% (ce dernier chiffre étant calculé sur la base de la farine telle que reçue).
- Qualista Type 55, également produit par les meuniers Minoterie Paulic, Bretagne, France, cette farine, également 100% à base de blé tendre, étant obtenue par broyage de grains ozonés. Les taux d'humidité et de protéines sont de 14,7% et de 10,63%, respectivement.

- Type 65 Farine Label rouge de marque « Petit Bonheur » commercialisée par les meuniers Minoterie Gers Farine. Cette farine contient, à part la farine de blé tendre, du remoulage CRC micronisé (les blés certifiés par le Centre de Recherche sur les Céréales (CRC) sont cultivés dans des conditions de restrictions d'utilisation de pesticides), du gluten de blé, et des enzymes (des alpha-amylases d'Aspergillus oryzae). Le taux de protéines est ici de 11,79%. Le taux d'humidité est de 14,7%.
- Une farine de catégorie « Type 65 » commercialisées par Minoterie Gers Farine, cette fois-ci « sans correcteur » (sans additif, protéique notamment). Les taux d'humidité et de protéines sont de 14,8% et de 11,44%, respectivement.

### Tests de panification

Selon la méthode BIPEA (Bureau Interprofessionnel d'Etudes Analytiques), un boulanger professionnel prépare du pain suivant un protocole standard, en attribuant une note détaillée pour divers aspects à chaque étape de la procédure. La note globale dite « valeur boulangère » est une note sur 300, composée de trois notes, chacune sur 100, relatives à différents aspects ; plus précisément sont attribués une « note pâte » sur 100, une « note pain » sur 100 et une « note mie » sur 100.

Concernant les évaluations entrant dans la « note pâte », les sous-catégories d'évaluation sont comme suit : pétrissage (note sur 25), pointage (note sur 10), façonnage (note sur 25), apprêt (note sur 10), mise au four (note sur 30). Chaque sous-catégorie comporte elle-même des sous-catégories d'évaluation. Par exemple, l'aptitude au pétrissage a été notée dans la présente étude en tenant compte des cinq facteurs suivants : rapidité de lissage, caractère collant de la pâte, extensibilité, élasticité et relâchement. Pour chaque évaluation, le boulanger note sur un maximum de 10, un coefficient étant attribué à chaque facteur évalué, comme il est montré dans le Tableau 2 suivant. Par exemple, une note de 10 pour la rapidité en lissage contribuera 5 à la note totale « pétrissage » (note totale sur 25). Toute la série d'évaluations est présentée au Tableau 2 suivant. Dans l'esprit des évaluations, un caractère jugé « normal » est noté 10, un défaut jugé, soit en excès, soit en insuffisance, peu intense est noté 7, un défaut jugé, soit en excès, soit en insuffisance, intense est noté 4, un défaut jugé, soit en excès, soit en insuffisance, très intense est noté 1. En plus des coefficients des notes individuelles (voir colonne « Coef. » dans le Tableau 2 suivant), des coefficients d'abattement (coefficients de pénalisation) sont susceptibles d'être affectés aux notes pour les domaines d'évaluation (pétrissage, pointage etc.), celles-ci étant les sommes des notes individuelles (ex : lissage, collant pâte etc.). Les coefficients d'abattement (coefficients de pénalisation) se déterminent d'après des critères prépondérants, indiqués par le préfixe P- dans le Tableau 2 suivant. Si le ou les critères prépondérants dans un domaine d'évaluation est (sont tous) noté(s) avec la note maximale 10, la note globale pour le domaine d'évaluation (pétrissage, pointage etc.) n'est pas sujet à un abattement (un coefficient global 1 est appliqué). Si un critère prépondérant est noté 7 cependant, un coefficient de 0,75 est appliqué à la note globale pour le domaine d'évaluation. Un critère prépondérant noté 4 ou 1 donne des coefficients de 0,5 et de 0,25, respectivement, à appliquer à la note globale pour le domaine d'évaluation. Dans les cas où il y a deux critères considérés comme prépondérants (c'est le cas pour les étapes de pétrissage, de façonnage et de mise au four), c'est l'appréciation la plus pénalisante (la note la plus basse) qui détermine le choix du coefficient à utiliser. Par exemple, un critère noté 1, indépendamment d'une note éventuellement plus élevée pour l'autre critère prépondérant, conduit à appliquer un coefficient d'abattement de 0,25, divisant par 4 la note globale.

**Tableau 2 : Grille d'évaluation de la valeur boulangère Note : « CL » signifie « Coup de lame » (scarification du pain), « Régularité A » fait référence à la régularité de l'alvéolage et « Epaisseur A » à l'épaisseur des alvéoles.**

| Observations laboratoire | | Insuffisance | | | | Excès | | | Coef. | Note x Coef. |
|---|---|---|---|---|---|---|---|---|---|---|
| | | 1 | 7 | 4 | 10 | 7 | 4 | 1 | | |
| **Evaluations « note pâte »** | | | | | | | | | | |
| Pétrissage | Rapidité Lissage | | | | | | | | 0,5 | |
| | **P-**Collant Pâte | | | | | | | | 0,5 | |
| | Extensibilité | | | | | | | | 0,5 | |
| | Elasticité | | | | | | | | 0,5 | |
| | **P-** Relâchement | | | | | | | | 0,5 | |
| | | Note sur 25 = | | | | | | | | * |
| Pointage | Détente / relâchement | | | | | | | | 1 | |
| | | Note sur 10 = | | | | | | | | |
| Façonnage | **P-**Allongement | | | | | | | | 1 | |
| | Elasticité | | | | | | | | 0,5 | |
| | **P-**Collant Pâte | | | | | | | | 1 | |
| | | Note sur 25 = | | | | | | | | * |
| Apprêt | Action fermentaire | | | | | | | | 0,5 | |
| | Pate Déchirement | | | | | | | | 0,5 | |
| | | Note sur 10 = | | | | | | | | |
| Mise au four | **P-**Collant Pâte | | | | | | | | | |
| | **P-**Tenue Pâte | | | | | | | | | |
| | | Note sur 30 = | | | | | | | | * |
| | | | | | | | | | | |

| **Evaluations « note pain »** | | | | | | | | | | |
|---|---|---|---|---|---|---|---|---|---|---|
| Expansion | Volume | (cm³) | | | | Note sur 30 = | | | | |
| Aspect du pain | Section | | | | | | | | 1 | |
| | Couleur | | | | | | | | 2 | |
| | Epaisseur | | | | | | | | 0,5 | |
| | Crosutillant | | | | | | | | 0,5 | |
| | **P-**Développement CL | | | | | | | | 1 | |
| | Régularité CL | | | | | | | | 1 | |
| | Déchirement CL | | | | | | | | 1 | |
| | | Note sur 70 = | | | | | | | | * |
| | | | | | | | | | | |

| **Evaluations « note mie »** | | | | | | | | | | |
|---|---|---|---|---|---|---|---|---|---|---|
| Aspect de la mie | Couleur | | | | | | | | | |
| | Souplesse texture | | | | | | | | | |
| | Elasticité texture | | | | | | | | | |
| | Collant texture | | | | | | | | | |
| | Régularité A | | | | | | | | | |
| | Epaisseur A | | | | | | | | | |
| | Flaveur | | | | | | | | | |
| | | Note sur 100 = | | | | | | | | |

| | | | | | | | | | | |
|---|---|---|---|---|---|---|---|---|---|---|
| * Les notes globales pour les domaines d'évaluation (« Note sur 25 » etc.) sont chacune constituée de la somme des valeurs (note x coefficient) multipliée par un éventuel coefficient d'abattement déterminé par les critères prépondérants (indiqués par un suffixe P-) | | | | | | | | | | |

### Protocole de panification

Dans le cadre de cette étude, des tests ont été réalisés sur des échantillons de 2000 g des farines dont l'origine a été indiquée plus haut. À chaque fois 40 g de levure boulangère a été ajoutée et une quantité de sel qui correspond à 0 %, 0,8 %, 1,0 %, 1,2 % (tests comparatifs), 1,4 % (test selon l'invention) ou 1,8 % (test comparatif) en masse par rapport à la masse de farine, par ajout, respectivement, de 0 g, 16 g, 20 g, 24 g, 28 g ou 36 g de sel. Chaque test de panification a été réalisé avec un taux d'hydratation de 62,5 % (pourcentage d'eau par rapport à la farine).

Le protocole précis de panification réalisée avec ces constituants a été comme suit :
1. Pétrissage : Vitesse 1 → 5 min, Vitesse 2 → 10 min, Ajout du sel, Vitesse 2 → 5 min.
2. Pointage : Comprend les étapes de fermentation en masse, division, collage et détente. À l'arrêt des pétrins, une fermentation en masse de 20 minutes est réalisée (à une température de 25°C ± 1°C). C'est à ce stade que la grille de notation des caractéristiques de la pâte est remplie. Ensuite la pâte du pétrin est transférée dans la cuve de fermentation en une seule fois. Pour la division, une découpe en 8 pâtons de 350 g chacun est effectuée, suivie d'un boulage des pâtons de façon serrée. Dans une phase de détente de durée 20 minutes, les pâtons boulés sont recouverts d'un plastique pour éviter le dessèchement. C'est à ce moment que les caractéristiques du pointage peuvent être notées sur la grille de notation.
3. Façonnage mécanique : l'allongement, l'élasticité et le caractère éventuellement (excessivement) collant de la pâte sont notés à ce stade.
4. Apprêt : Une durée de 120 minutes s'écoule entre le milieu du façonnage et la fin de la deuxième fermentation en chambre. La fermentation en cours et tout déchirement éventuel de la pâte sont évalués.
5. Scarification et cuisson : Les pâtons de 350 g façonnés sont retirés de la chambre de fermentation afin de les disposer sur le tapis enfourneur et entaillés de trois coups de lame. L'aptitude de mise au four est noté sur la grille de notation et ensuite les pâtons sont introduits dans le four à 250°C ± 10°C, saturé en vapeur d'eau. Après une cuisson complète de 25 ± 2 minutes, les pains sont retirés et disposés sur un support aéré, de façon à permettre le ressuage.

Dans l'appréciation des caractéristiques des pains, les notes sont attribuées selon la méthode indiquée plus haut, permettant de déterminer une valeur globale appelée « valeur boulangère » sur 300 points, regroupant une « note pâte » sur 100 points, une « note pain » sur 100 points et une « note mie » sur 100 points. Le volume des pains préparés selon le protocole indiqué plus haut est mesuré (en cm³) dans un volumètre. Le volume est converti en note (d'après la grille BIPEA), un volume inférieur à 1200 cm³ donnant une note volume de 0, avec une note qui monte jusqu'à 30 (sur 30) pour un volume supérieur ou égal à 2200 cm³.

Le Tableau 3 suivant récapitule les valeurs obtenues lors de l'évaluation de pains préparés et étudiés selon le protocole indiqué plus haut, ces pains étant préparés avec différents types de farines et avec des taux de sel variables.

**Tableau 3 : Evaluation boulangère de pâtes et de pains préparés avec différentes farines à des niveaux de sel variables**

| Farine | Taux de protéines (%) | % sel * | Note pâte | Note pain | Note mie | Valeur boulangère | Volume en cm³ |
|---|---|---|---|---|---|---|---|
| Paulic (T55 sans additif) | 10,64 | 0 | 26 | 13,75 | 85 | 124,75 | 810 |
| Farine de grains de blé ozonés (T 55) (Qualista) | 10,63 | 0 | 31,5 | 10,75 | 85 | 127,25 | 830 |
| | | 0,8 | 70,9 | 28,25 | 82 | 181,13 | 970 |
| | | 1,0 | 82 | 44,6 | 88 | 214,63 | 1050 |
| | | 1,2 | 83,5 | 45,75 | 85 | 214,25 | 1200 |
| | | 1,4 | 88,9 | 51,6 | 88 | 228,48 | 1320 |
| | | 1,8 | 94 | 46 | 85 | 225,05 | 1210 |
| T65 Label rouge avec additifs | 11,79 | 0 | 47,1 | 29,5 | 97 | 173,63 | 1220 |
| | | 0,8 | 77,8 | 70 | 94 | 241,75 | 1400 |
| | | 1,0 | 69,6 | 73 | 100 | 242,63 | 1500 |
| | | 1,2 | 69,6 | 71,5 | 97 | 238,13 | 1650 |
| | | 1,4 | 87,4 | 79 | 97 | 263,38 | 1700 |
| | | 1,8 | 81,1 | 79,6 | 94 | 254,73 | 1720 |
| T65 sans correcteur | 11,44 | 0 | 33,75 | 10,75 | 88 | 132,5 | 800 |
| | | 0,8 | 48,6 | 25,25 | 97 | 170,88 | 920 |
| | | 1,4 | 76,6 | 52,3 | 94 | 222,93 | 1210 |
| | | 1,8 | 87,4 | 64,6 | 91 | 242,98 | 1320 |

| | | | | | | | |
|---|---|---|---|---|---|---|---|
| * Le pourcentage en sel en masse de sel (sel de mer) ajouté par rapport à la masse de farine (masse de la farine mesurée telle que reçue) | | | | | | | |

De manière générale, on considère qu'un taux élevé de protéines (gluten, enzymes) est corrélé avec des volumes et des valeurs boulangères élevées. Le gluten est en effet nécessaire à la construction du réseau des alvéoles du pain, et les enzymes participent aux réactions permettant la production de dioxyde de carbone par fermentation. Ainsi est-il intéressant de constater que les propriétés des pâtes et des pains obtenus avec la Qualista T55 (farine fabriquée à partir de grains de blé traités à l'ozone) sont globalement, sur toute la gamme de teneur en sel étudiée, semblables à celles obtenues avec une farine de type T65 sans « correcteur » (sans additifs, protéiques notamment), bien que cette dernière possède un taux de protéines supérieur. D'un intérêt particulier dans la présente étude, on peut relever que la valeur boulangère ainsi que le volume de pains après cuisson atteignent des valeurs maximales à 1,4 % sel pour la farine Qualista, alors que ces valeurs continuent d'augmenter pour la farine de type T65 sans correcteur si le taux de sel est augmenté jusqu'à 1,8%. Le volume augmente également en allant de 1,4 % en sel à 1,8 % pour la farine de type T65 avec correcteur et la valeur boulangère est presque stable. Il y a donc un comportement distinct des farines obtenues par broyage de grains de blé traités à l'ozone, par rapport à des farines classiques, en ce qui concerne l'effet du sel sur les propriétés boulangères.

## Revendications

1. Composition pour pétrissage comprenant :
- de la farine obtenue par broyage de grains traités avec de l'ozone préalablement audit broyage ;
- du sel de mer (NaCl) en une quantité comprise entre au moins 1,4 % et au plus 1,6 % en poids relatif au poids de la farine;
- de l'eau.

2. Composition selon la revendication 1, comprenant de la levure ou du levain.

3. Composition selon l'une quelconque des revendications 1 à 2, dans laquelle les grains dont la farine est issue sont des grains de blé tendre, de seigle, de blé dur, de blé et/ou de seigle maltés, de maïs, ou de leurs mélanges.

4. Produit panifié obtenu par fermentation et/ou cuisson d'une composition pour pétrissage selon l'une quelconque des revendications 1 à 3.

5. Utilisation d'une composition pour pétrissage selon l'une des revendications 1 à 3 dans un procédé de fermentation et/ou de cuisson afin d'obtenir un produit panifié.

## Patentansprüche

1. Knetzusammensetzung, umfassend:
- Mehl, das durch Mahlen von Körnern erhalten wird, die vor dem Mahlen mit Ozon behandelt wurden;
- Meersalz (NaCl) in einer Menge zwischen mindestens 1,4 Gew.-% und höchstens 1,6 Gew.-%, bezogen auf das Gewicht des Mehls;
- Wasser.

2. Zusammensetzung nach Anspruch 1, die Hefe oder Sauerteig umfasst.

3. Zusammensetzung nach einem der Ansprüche 1 bis 2, wobei die Körner, von denen das Mehl herrührt, Körner von Weichweizen, Roggen, Hartweizen, gemälztem Weizen und/oder Roggen, Mais oder deren Gemischen sind.

4. Backware, die durch Fermentation und/oder Backen einer Knetzusammensetzung nach einem der Ansprüche 1 bis 3 erhalten wird.

5. Verwendung einer Knetzusammensetzung nach einem der Ansprüche 1 bis 3 bei einem Fermentations- und/oder Backverfahren, um eine Backware zu erhalten.

## Claims

1. Composition for kneading, comprising:
- flour obtained by grinding grains treated with ozone prior to said grinding;
- sea salt (NaCl) in a quantity of between at least 1.4% and at least 1.6% by weight relative to the weight of the flour;
- water.

2. Composition according to Claim 1, comprising yeast or levening.

3. Composition according to either Claim 1 or 2, wherein the grains from which the flour originates are grains of common wheat, rye, durum, malted wheat and/or rye, corn, or mixtures thereof.

4. Baked bread product obtained by fermentation and/or cooking of a composition for kneading according to any one of Claims 1 to 3.

5. Use of a composition for kneading according to one of Claims 1 to 3, in a fermentation and/or cooking method in order to obtain a baked bread product.
